# EUROPEAN PATENT APPLICATION

(11) **EP 1 919 194 A2**
(43) Date of publication of application: **07.05.2008**
(21) Application number: 07112245.1
(22) Date of filing: 11.07.2007
(51) Int. Cl.: H04N 5/00

(54) **Wireless set-top box, wireless display apparatus, wireless video system, and control method thereof**

(30) Priority: 28.08.2006 KR 20060081801
(71) Applicant: Samsung Electronics Co., Ltd., Suwon-si, Gyeonggi-do 442-742 (KR)
(72) Inventor: Lee, Chang-jin, Yeongtong-gu, Suwon-si, Gyeonggi-do (KR)
(74) Representative: Davies, Robert Ean

(57) **Abstract**

A wireless set-top box (110), includes: a plurality of module units (200); a power source unit (232) which supplies driving power to the plurality of module units; a plurality of wireless interface units (240) each of which wirelessly transmits audio/video data inputted from a respective module unit and first control data to a plurality of wireless display apparatuses (120, 130, 140), and wirelessly receives second control data from the respective wireless display apparatus; and a controller (230) which analyzes the second control-data, and controls the power source unit to supply the driving power to a module unit corresponding to one of the plurality of wireless display apparatuses if the controller detects power-on data to turn on the one of the wireless display apparatuses from the second control data.

## Description

Apparatuses and methods consistent with the present invention relate to a wireless set-top box, a wireless display apparatus, a wireless video system and a control method thereof, and more particularly, to a wireless set-top box, a wireless display apparatus, a wireless video system and a control method thereof, which can receive and transmit audio/video (AV) data and control data by a multi-channel communication.

A wireless video system related to a video signal includes a wireless set-top box and a wireless display apparatus. Here, the wireless set-top box receives a radio frequency (RF) signal, and gets a digital video signal through a channel selected by a user and tuned by a tuner. Then, the wireless set-top box transmits the digital video signal to the wireless display apparatus via a wireless interface unit. The wireless display apparatus receives the digital video signal from the wireless set-top box and generates video data based on the digital video signal, thereby processing the video data to be displayed on a display unit thereof.

According to a related art wireless video system, one wireless set-top box is connected to only one wireless display apparatus. If a user turns on the wireless display apparatus by using a remote controller, power is supplied to a video processing unit and a display unit of the wireless display apparatus, and power-on data is provided to the wireless set-top box. When the wireless set-top box receives the power-on data, driving power is supplied to a tuner unit. Then, a digital video signal is obtained from an RF signal received by the tuner unit, and transmitted to the wireless display apparatus. Conversely, if the user turns off the wireless display apparatus by manipulating the remote controller, the power is not supplied to the video processing unit and the display unit of the wireless display apparatus, and power-off data is provided to the wireless set-top box. When the wireless set-top box receives the power-off data, the driving power is not supplied to the tuner unit.

That is, according to the related art wireless video system for a single channel communication, if the user turns on or off the wireless display apparatus by manipulating the remote controller, the wireless set-top box is also turned on or off. Accordingly, it is difficult to apply the related art wireless video system to a multi-channel communication that a wireless set-top box transmits a video signal to a plurality of wireless display apparatuses.

Accordingly, it is an aim of embodiments of the present invention to provide a wireless set-top box, a wireless display apparatus, a wireless video system and a control method thereof, which can receive and transmit AV data and control data by a multi-channel communication.

Further, it is another aim of embodiments of the present invention to provide a wireless set-top box, a wireless display apparatus, a wireless video system and a control method thereof, which can display control-state data on a display unit for a user's convenience.

Additional aims and advantages of embodiments of the present invention will be set forth in the description which follows and, in unit, will be obvious from the description, or may be learned by practice of the present invention.

According to an aspect of the present invention, there is provided a wireless set-top box, comprising: a plurality of module units; a power source unit which supplies driving power to the plurality of module units; a plurality of wireless interface units, wherein each wireless interface unit wirelessly transmits audio/video (AV) data inputted from a respective module unit and first control data to a respective wireless display apparatus, and wirelessly receives second control data from the respective wireless display apparatus; and a controller which analyzes the second control data, and controls the power source unit to supply the driving power to a module unit corresponding to one of the plurality of wireless display apparatuses if the controller detects power-on data to turn on the one of the wireless display apparatuses from the second control data.

Preferably, if a result of the analysis of the controller indicates that the second control data is received from a first wireless display apparatus and comprises power-off data to turn off a second wireless display apparatus, the controller controls a corresponding wireless interface unit to transmit the power-off data as the first control data to the second wireless display apparatus.

Preferably, if a result of the analysis of the controller indicates that the second control data is received from a first wireless display apparatus and comprises power-state request data with respect to at least one of the plurality of wireless display apparatuses, the controller controls a corresponding wireless interface unit to transmit power-state data of the at least one of the plurality of wireless display apparatuses as the first control data to the first wireless display apparatus.

Preferably, the wireless set-top box further comprises a storing unit, wherein the controller controls the storing unit to store the power-state data of the at least one of the plurality of wireless display apparatuses.

Preferably, if a result of the analysis of the controller indicates that the second control data is received from a first wireless display apparatus and comprises display-state request data with respect to at least one of the plurality of wireless display apparatuses, the controller controls a corresponding wireless interface unit to transmit display-state data of the at least one of the plurality of wireless display apparatuses as the first control data to the first wireless display apparatus.

Preferably, the wireless set-top box further comprises a storing unit, wherein the controller controls the storing unit to store the display-state data of the at least one of the plurality of wireless display apparatuses.

Preferably, each of the plurality of module units comprises a tuner unit and an MPEG unit, and the controller controls the power source unit to supply the driving power to at least one of the tuner unit and the MPEG unit according to the analysis of the second control data.

Preferably, if a result of the analysis of the controller indicates that the second control data is received from a first wireless display apparatus and comprises power-off data to turn off one of the plurality of wireless display apparatuses, the controller controls the power source unit to stop supplying the driving power to a corresponding module unit.

Preferably, the plurality of module units comprises a first module unit to receive and process a first channel, and a second module unit to receive and process a second channel.

According to another aspect of the present invention, there is provided a wireless display apparatus to communicate with a wireless set-top box capable of communicating with a plurality of external wireless display apparatuses, the wireless display apparatus comprising: a display unit; a wireless interface unit which receives AV data and first control data from the wireless set-top box, and transmits second control data to the wireless set-top box; a controller which controls the wireless interface unit to transmit control-state request data as the second control data to the wireless set-top box if control-state data of at least one of the plurality of external wireless display apparatuses is requested, and generates the control-state data, from the first control data, to be displayed on the display unit.

Preferably, the first control data comprises power-state data of the at least one of the plurality of external wireless display apparatuses.

According to an exemplary embodiment of the present invention, the display unit comprises a light emitting diode (LED) unit, and the controller controls the LED unit to indicate the power-state data.

Preferably, the first control data comprises display-state data of the at least one of the plurality of external wireless display apparatuses.

Preferably, the wireless display apparatus further comprises an on screen display (OSD) generating unit, wherein the controller controls the OSD generating unit to display the control-state data on the display unit.

Preferably, the wireless display apparatus further comprises an input unit which receives an input signal, wherein, if the input signal indicates turning off at least one of the plurality of external wireless display apparatuses, the controller controls the wireless interface unit to transmit power-off data to turn off the at least one of the plurality of external wireless display apparatuses, as the second control data to the wireless set-top box.

According to another aspect of the present invention, there is provided a control method of a wireless video system comprising a wireless set-top box and a plurality of wireless display apparatuses, the method comprising: supplying power to a first wireless display apparatus and transmitting power-on data to the wireless set-top box if an input signal to turn on the first wireless display apparatus is inputted to the first wireless device; controlling the wireless set-top box to supply driving power to a first module unit based on the power-on data, and to transmit audio/video (AV) data processed by the first module to the first wireless display apparatus; and controlling the first wireless display apparatus to display an image corresponding to the AV data on a display unit.

Preferably, the control method further comprises: transmitting control state-request data to the wireless set-top box if an input signal to request control-state data of at least one of the plurality of wireless display apparatuses is inputted to the first wireless device; causing the wireless set-top box to receive the control-state request data and to transmit the control-state data of the at least one of the plurality of wireless display apparatuses to the first wireless display apparatus; and causing the first wireless display apparatus to receive the control-state data of the at least one of the plurality of wireless display apparatuses and to display the received control-state data on the display unit.

Preferably, the control-state data comprises power-state data of the at least one of the plurality of wireless display apparatuses.

Preferably, the control-state data comprises display-state data of the at least one of the plurality of wireless display apparatuses.

According to another aspect of the present invention, there is provided a control method of a wireless set-top box capable of communicating with a plurality of wireless display apparatuses, the method comprising: analyzing second control data received from one of the plurality of wireless display apparatuses, and supplying driving power to a corresponding module unit if, as a result of the analysis of the second control data, power-on data to turn on a first wireless display apparatus is detected from the second control data; and transmitting audio/video (AV) data processed in the corresponding module unit to the first wireless display apparatus.

Preferably, the control method further comprises analyzing the second control data; and if a result of the analysis of the second control data indicates that the second control data is received from the first wireless display apparatus and comprises power-off data to turn off a second wireless apparatus, transmitting the power-off data as first control data to the second wireless display apparatus.

Preferably, the control method further comprises storing control-state data of the at least one of the plurality of wireless display apparatuses in a storing unit.

Preferably, the control method further comprises analyzing the second control data; and if a result of the analysis of the second control data indicates that the second control data comprises control-state request data, by which control state data of the at least one of the plurality of wireless display apparatuses is requested, transmitting the control-state data of the at least one of the plurality of wireless display apparatuses to the first wireless display apparatus.

According to another aspect of the present invention, there is provided a control method of a wireless display apparatus to communicate with a wireless set-top box capable of communicating with a plurality of external wireless display apparatuses, respectively, the method comprising: receiving audio/video (AV) data from the wireless set-top box, and processing the received AV data to be decoded and displayed on a display unit of the wireless display apparatus; transmitting control state request data to the wireless set-top box if an input signal requesting to display control-state data of at least one of the plurality of external wireless display apparatuses on the display unit is received; and receiving the control-state data of at least one of the plurality of external wireless display apparatuses from the wireless set-top box and displaying the received control-state data on the display unit.

Preferably, the control method further comprises transmitting power-off data as control data to the wireless set-top box, if an input signal indicating turning off at least one of the plurality of external wireless display apparatuses is received.

For a better understanding of the invention, and to show how embodiments of the same may be carried into effect, reference will now be made, by way of example, to the accompanying diagrammatic drawings in which:
FIG. 1 is a schematic block diagram illustrating a wireless video system according to an embodiment of the present invention;
FIG. 2 is a detailed block diagram illustrating a wireless set-top box according to an embodiment of the present invention;
FIG. 3 is a detailed block diagram illustrating the wireless display apparatus according to an embodiment of the present invention;
FIG. 4 is a flow chart illustrating a controlling method of a wireless set-top box, a first wireless display apparatus and a second wireless display apparatus, which are interlocked in a wireless video system according to an embodiment of the present invention;
FIG. 5 is a flow chart illustrating a control method of the wireless set-top box according to an embodiment of the present invention;
FIG. 6 is a flow chart illustrating a control method of the wireless display apparatus according to an embodiment of the present invention; and
FIG. 7 is a diagram of an interface screen showing control-state data about a plurality of wireless display apparatuses according to an embodiment of the present invention.

Reference will now be made in detail to embodiments of the present invention, examples of which are illustrated in the accompanying drawings, wherein like reference numerals refer to like elements throughout.

Further, if detailed description of known technology is unnecessary to show features of the present invention, it will be omitted.

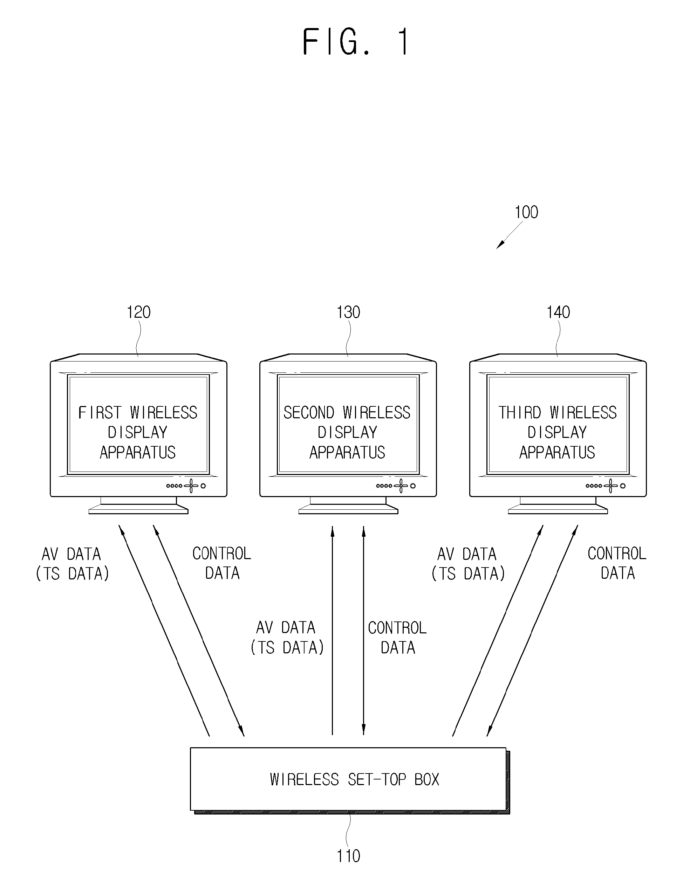

FIG. 1 is a schematic block diagram illustrating a wireless video system 100 according to an embodiment of the present invention. The wireless video system 100 includes a wireless set-top box 110 capable of multi-channel transmission, and a plurality of wireless display apparatuses 120, 130 and 140. The plurality of wireless display apparatuses 120, 130 and 140 includes a first wireless display apparatus 120, a second wireless display apparatus 130, and a third wireless display apparatus 140. At this time, the wireless set-top box 110 may be placed in a living room, but the plurality of wireless display apparatuses 120, 130, and 140 are may be placed in the living room, a bedroom, and a kitchen, respectively.

Each of the wireless set-top box 110 and the plurality of wireless display apparatuses 120, 130, and 140, further includes a wireless interface unit. The wireless video system according to an embodiment of the present invention may have a wireless communication through a wireless local area network (LAN). As an example of the international standard of the wireless LAN, Institute of Electrical and Electronics Engineers (IEEE) 802.11 provides a Media Access Control (MAC) layer and a physical layer. Further, the IEEE 802.11 is classified into "802.11," "802.11a," "802.11b," and "802.11g," which are different from each other in a frequency band, a transmission speed, an encoding type, and so on.

A wireless transmission operation of control data is as follows. If a user inputs control data to the plurality of wireless display apparatuses 120 130, and 140 by manipulating buttons provided on the plurality of wireless display apparatuses 120, 130 and 140 or corresponding remote controllers, the inputted control data are processed by a controller of a respective one of the plurality of wireless display apparatuses 120, 130, and 140. If it is needed to transmit the control data to the wireless set-top box 110, the controller packetizes the control data and wirelessly transmits the packetized control data to the wireless set-top box 110. For example, the control data includes power-on data, power-off data, control-state data, power-state data, display-state data, channel-up data, channel-down data, audio-selecting (stereo or mono) data, volume-adjusting data, caption-information data, and the like.

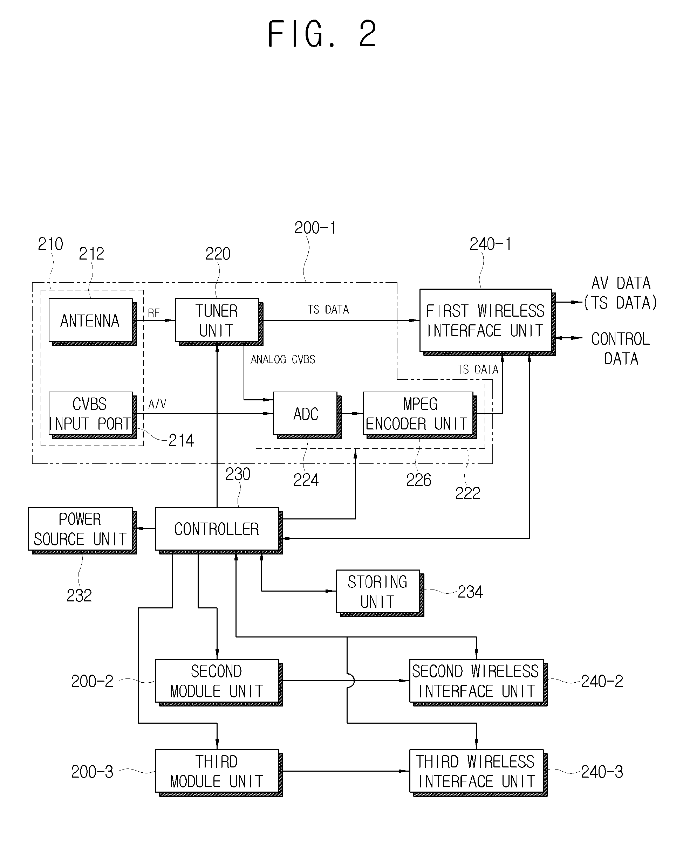

FIG. 2 is a detailed block diagram illustrating a wireless set-top box 110 according to an embodiment of the present invention. The wireless set-top box 110 includes a plurality of module units 200-1, 200-2, and 200-3; a plurality of first wireless interface units 240-1, 240-2, and 240-3; a controller 230; and a power source unit 232.

As illustrated, a first module unit 200-1 includes a signal input unit 210, a tuner unit 220, and a moving picture expert group (MPEG) unit 222. Other module units 200-2 and 200-3 include the same or almost same configuration as the first module unit 200-1.

The signal input unit 210 includes an antenna 212, and a Composite Video Baseband Signal (CVBS) input port 214 or other input port (not shown). The antenna 212 receives a satellite digital broadcast signal, a terrestrial digital broadcast signal or an analog broadcast signal, and provides a corresponding RF signal to the tuner unit 220. Here, the CVBS input port 214 is an input port capable of receiving an analog CVBS and an analog audio signal.

The tuner unit 220 tunes to a digital broadcast signal having a frequency corresponding to a channel selected by a user among a plurality of channels for digital broadcast signals received through the antenna 212, and outputs corresponding transport stream (TS) data. Alternatively, the tuner unit 220 tunes to an analog broadcast signal having a frequency corresponding to a channel selected by a user among a plurality of channels of the analog broadcast signals, and outputs a corresponding analog CVBS and a corresponding analog audio signal.

The MPEG unit 222 includes an analog/digital converter (ADC) unit 224 and an MPEG encoder unit 226. The ADC unit 224 converts an analog CVBS and an analog audio signal provided from the tuner unit 220 or the CVBS input port 214 into a digital CVBS signal and a digital audio signal, respectively. The MPEG encoder unit 226 compresses the converted digital video and audio signals and outputs it as the TS data.

A respective one of the plurality of wireless interface units 240-1, 240-2, and 240-3 transmits the TS data provided from the tuner unit 220 or the MPEG unit 222 to one of the plurality of wireless display apparatuses 120, 130, and 140. Further, the wireless interface unit 240-1, 240-2, or 240-3 packetizes the control data provided from the controller 230, and transmits the packetized control data to the concerned wireless display apparatus 120, 130, or 140. The wireless interface unit 240-1, 240-2, or 240-3 transmits other packetized control data received from one of the plurality of wireless display apparatuses 120, 130, and 140 to the controller 230.

The controller 230 controls the tuner unit 220, the MPEG unit 222, the plurality of wireless interface units 240-1, 240-2, and 240-3, the power source unit 232 and a storing unit 234.

The power source unit 232, according to control of the controller 230, supplies driving power to the plurality of module units 200-1, 200-2, and 200-3. For example, if the tuner unit 220 of the first module unit 200-1 receives a digital broadcast signal, the power source unit 232 supplies the driving power only to the tuner unit 220. If the tuner unit 220 of the first module unit 200-1 receives an analog broadcast signal, the power source unit 232 provides the driving power to both the tuner unit 220 and the MPEG unit 222. If a video signal and an audio signal are received through the CVBS input port 214, the power source unit 232 supplies the driving power only to the MPEG unit 222.

The storing unit 234 stores not only control-state data related to the wireless set-top box 110 but also control-state data related to the respective wireless display apparatuses 120, 130, and 140 therein.

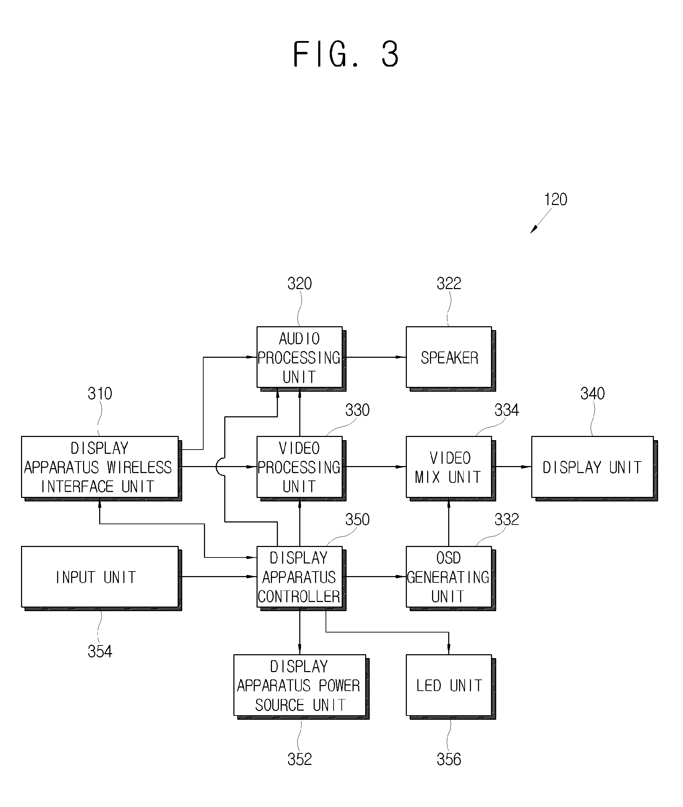

FIG. 3 is a detailed block diagram illustrating the first wireless display apparatus 120 according to an embodiment of the present invention. The first wireless display apparatus 120 includes a display apparatus wireless interface unit 310, an audio processing unit 320, a speaker 322, a video processing unit 330, an on screen display (OSD) generating unit 332, a video mixing unit 334, a display unit 340, a display apparatus controller 350, a display apparatus power source unit 352, an input unit 354, and a light emitting diode (LED) unit 356.

Other wireless display apparatus 130 and 140 include the same or almost same configuration as the first wireless display apparatus 120.

The display apparatus wireless interface unit 310 receives TS data and packetized control data from the wireless set-top box 110. Further, the display apparatus wireless interface unit 310 transmits control data from the display apparatus controller 350 to the wireless set-top box 110.

The audio processing unit 320 decodes the digital audio signal received from the display apparatus wireless interface unit 310 into audio data. The decoded audio data are outputted through the speaker 322.

The video processing unit 330 decodes the digital video signal inputted from the display apparatus wireless interface unit 310 into video data. The decoded video data are supplied to the video mixing unit 334. The OSD generating unit 332 generates screen data corresponding to various control-state data to be displayed on the display unit 340. For example, the OSD generating unit 332 generates the screen data corresponding to power control state and display state of the respective display apparatuses 120, and 130, and 140 illustrated in FIG. 1. The video mixing unit 334 mixes the video data generated from the video processing unit 330 and the respective screen data corresponding to the control-state data generated from the OSD generating unit 332 or selects the video data and the respective screen data, and provides them to the display unit 340.

The display unit 340 displays screen data corresponding to the video data and/or the control-state data processed from the video mixing unit 334.

The display apparatus controller 350 controls the display apparatus wireless interface unit 310, the audio processing unit 320, the video processing unit 330, the OSD generating unit 332, the LED unit 356, and the display apparatus power source unit 352. The LED unit 356 indicates the power control state of the first wireless display apparatuses 120 according to control of the display apparatus controller 350.

The display apparatus power source unit 352, according to control of the display apparatus controller 350, supplies a driving power to the first wireless display apparatus 120. Here, the driving power denotes a power requested for not a standby mode but a normal mode of the first wireless display apparatus 120.

The input unit 354 receives control data from a remote controller or senses whether or not a power button or the like provided on the first wireless display apparatus 120 is manipulated.

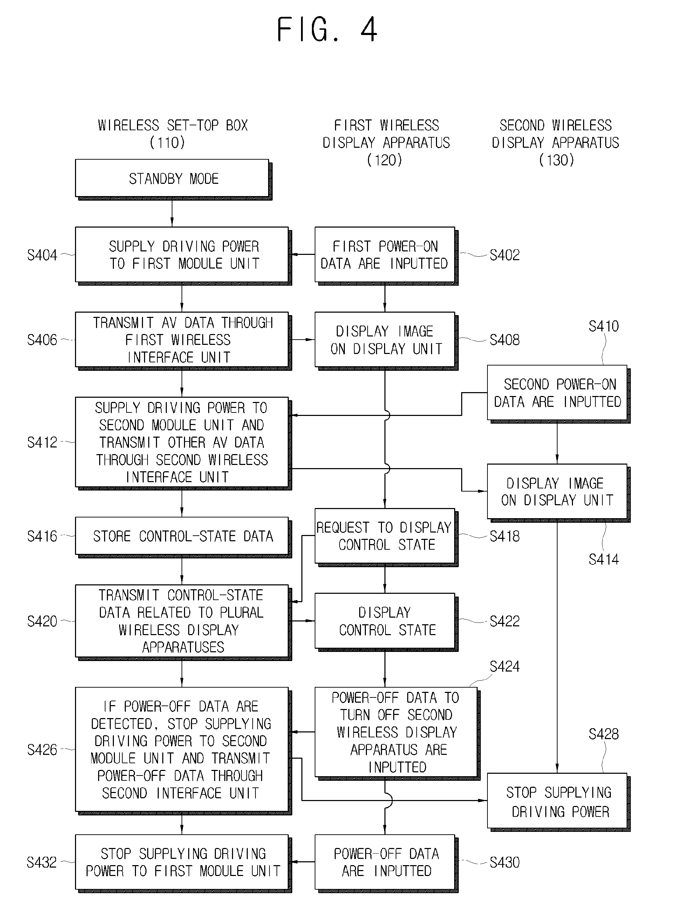

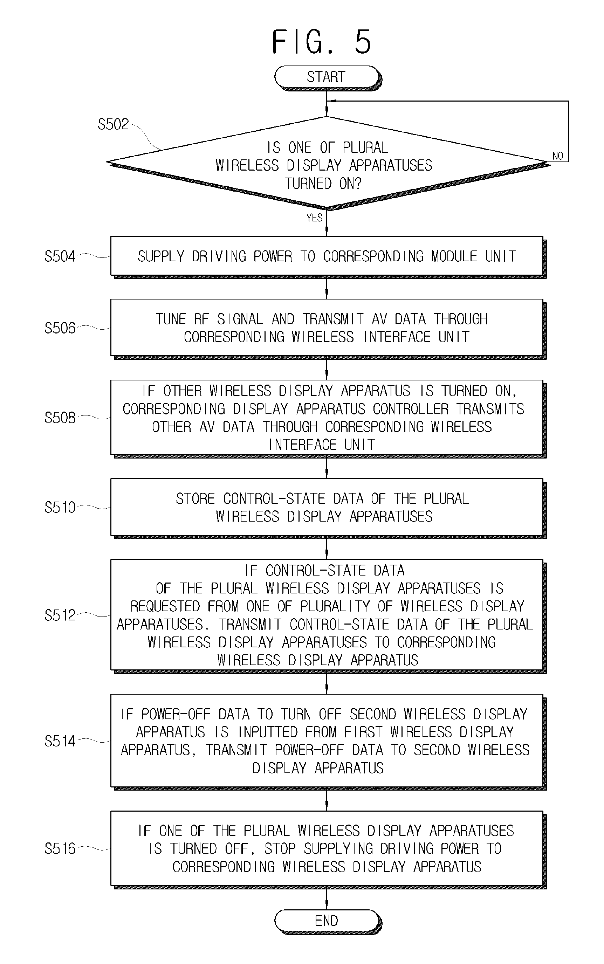

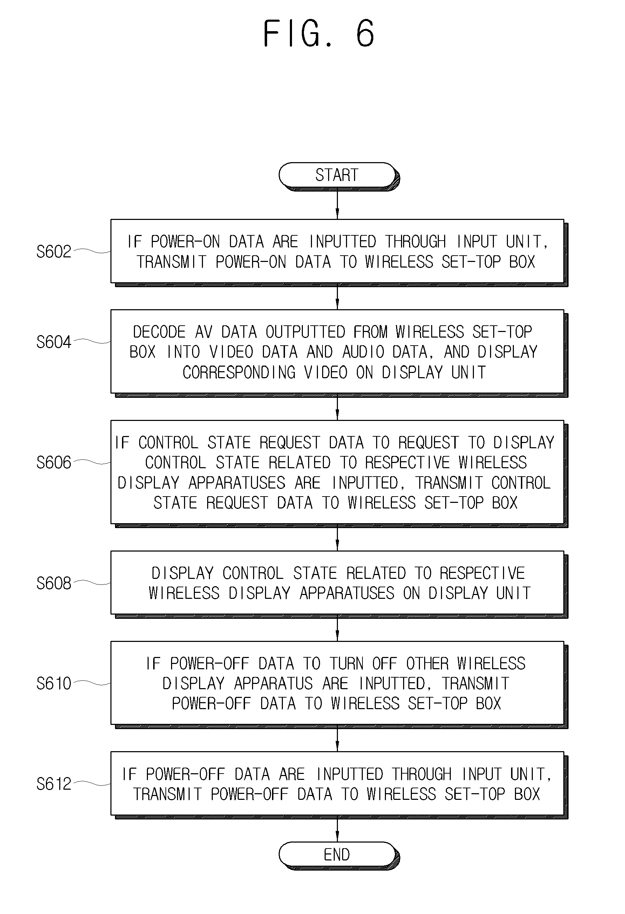

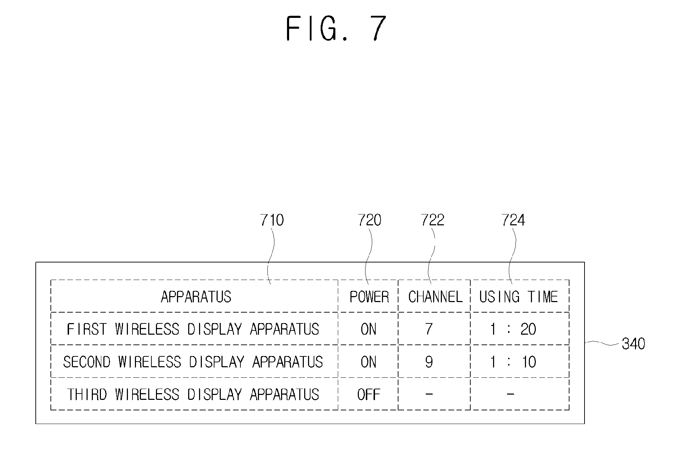

FIG. 4 is a flow chart illustrating a controlling method of the wireless set-top box 110, the first wireless display apparatus 120 and the second wireless display apparatus 130, which are interlocked in a wireless video system 100 according to an embodiment of the present invention. FIG. 5 is a flow chart illustrating a control method of the wireless set-top box 110 according to an embodiment of the present invention. FIG. 6 is a flow chart illustrating a control method of the first wireless display apparatus 120 according to an embodiment of the present invention. FIG. 7 is a diagram of an interface screen showing control-state data in the plurality of wireless display apparatuses 120, 130, and 140 according to an embodiment of the present invention.

If first power-on data are inputted to the first wireless display apparatus 120 through the input unit 354 such as a corresponding remote controller or a corresponding power-on key while the first wireless display apparatus 120, the second wireless display apparatus 130, and the wireless set-top box 110 are turned off, the display apparatus controller 350 transmits a control data packet along with the first power-on data to the wireless set-top box 110 through the display apparatus wireless interface unit 310 (S402 and S602).

The wireless set-top box 110 analyzes the transmitted control data packet, and determines which one of the wireless display apparatuses 120, 130, and 140 is turned on (S502). For example, if the wireless set-top box 110 detects the first power-on data from the control data packet transmitted from the first wireless display apparatus 120, the controller 230 controls the power source unit 232 to supply driving power to the module unit 200-1 corresponding to the detected power-on data (S404 and S504).

Further, the controller 230 of the wireless set-top box 110 detects channel data from the control data packet received from the first wireless interface unit 240-1, and supplies a channel voltage corresponding to a channel selected by a user to the tuner unit 220. Accordingly, the tuner unit 220 tunes to the selected channel and outputs digital compressed video and audio signal as TS data, or analog video and analog signals. The digital compressed video and audio signals outputted as the TS data from the tuner unit 220 are inputted to the first wireless interface unit 240-1, and then are packetized as AV (Audio/Video) data to be outputted to the first wireless display apparatus 120. The analog audio and video signals outputted from the tuner unit 220 are converted into the TS data in the MPEG unit 222 and inputted to the first wireless interface unit 240-1, and then are packetized as the AV data and transmitted to the first wireless display apparatus 120 (S406 and S506).

The first wireless display apparatus 120 decodes the AV data outputted from the wireless interface unit 240-1 into video data and audio data. Here, the video data are displayed on the display unit 340, and the audio data are output through the speaker 322 (S408 and S604).

If second power-on data are inputted to the second wireless display apparatus 130 through a corresponding input unit (not shown) such as a corresponding remote controller, a corresponding power key (S410) or the like, a corresponding display apparatus controller (not shown) transmits the control data packet along with the second power-on data to the wireless set-top box 110 through a corresponding display apparatus wireless interface unit (not shown). The wireless set-top box 110 supplies driving power to the second module unit 200-2, and by the same processes as described above, the TS data are inputted to the second wireless display apparatus 130 through the second interface unit 240-2. Then the TS data are packeted as the AV data, and are transmitted to the second wireless display apparatus 130 (S412 and S508).

The control-state data of the plurality of wireless display apparatuses 120, 130 and 140 include power state data and display-state data about a channel or the like, and are stored in the storing unit 234 (S416 and S510).

If control-state request data for requesting the control-state data with respect to the respective wireless display apparatuses 120, 130 and 140 to be displayed on the first wireless display apparatus 120 is inputted to the first wireless display apparatus 120 through the input unit 354, the display apparatus wireless interface unit 310 transmits the control data packet along with the control-state request data to the wireless set-top box 110 (S418 and S606). The wireless set-top box 110 analyzes the control data packet received from the first wireless display apparatus 120. As a result of analyzing the control data packet, if the wireless set-top box 110 detects the control-state request data from the received control data packet, the wireless set-top box 110 transmits the control data packet along with the control-state data to the first wireless display apparatus 120 (S420 and S512).

The display apparatus controller 350 of the first wireless display apparatus 120 analyzes the control data packet received from the wireless set-top box 110 and detects the control-state data from the control data packet. Then, the OSD generating unit 332 generates screen data corresponding to the control-state data. The video mixing unit 334 mixes the screen data and the video data outputted from the video processing unit 330 to display them on the display unit 340 (S422 and S608).

As illustrated in FIG. 7, an interface screen where the screen data corresponding to the respective control-state data are displayed shows display apparatus data 710 related to the wireless display apparatuses 120, 130 and 140; power-state data 720, channel data 722 and using time data 724 related to the respective wireless display apparatuses 120, 130 and 140.

If a power-off signal to turn off the second wireless display apparatus 130 is inputted into the first wireless display apparatus 120, the display apparatus wireless interface unit 310 transmits the control data packet along with the power-off signal to the wireless set-top box 110 (S424 and S610).

If power-off data to turn off the second wireless display apparatus 130 is detected from the control data packet received from the first wireless display apparatus 120, the controller 230 of the wireless set-top box 110 stops supplying driving power to the second module unit 200-2 based on the power-off data, and transmits the power-off data to the second wireless display apparatus 130 through the second wireless interface unit 240-2 (426 and S514).

Then, if the second wireless display apparatus 130 detects the power-off data, a corresponding display apparatus controller (not shown) of the second wireless display apparatus 130 stops supplying the driving power to the second wireless display apparatus 130 (S428).

On the other hand, if a power-off signal to turn off the first wireless display apparatus is inputted into the first wireless display apparatus 120 through the input unit 354, the display apparatus controller 350 stops supplying the driving power to the first wireless display apparatus 120 according to the power-off signal. Then, the display apparatus controller 350 transmits the control data packet along with the power-off signal to the wireless set-top box 110 (S430 and S612).

The controller 230 of the wireless set-top box 110 analyzes the control data packet received to the first wireless interface unit 240-1. If the first wireless display apparatus 120 is turned off, the controller 230 controls the power source unit 232 to stop supplying the driving power to the first module unit 200-1 (S432 and S516) .

As apparent from the above description, a wireless video system according to an embodiment of the present invention can transmit and receive AV data and control data by a multi-channel communication.

Further, according to an embodiment of the present invention, a user can monitor a control state of a plurality of wireless display apparatuses through an interface screen of one of the wireless display apparatuses that the user watches, by displaying control-state data related to the control state of the respective wireless display apparatuses.

In addition, in a wireless video system according to an embodiment of the present invention, a main wireless display apparatus can control sub wireless display apparatuses to be turned on or off.

Although a few embodiments of the present invention have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A wireless set-top box, comprising:
a plurality of module units;
a power source unit which supplies driving power to the plurality of module units;
a plurality of wireless interface units, wherein each wireless interface unit wirelessly transmits audio/video (AV) data inputted from a respective module unit and first control data to a respective wireless display apparatus, and wirelessly receives second control data from the respective wireless display apparatus; and
a controller which analyzes the second control data, and controls the power source unit to supply the driving power to a module unit corresponding to one of the plurality of wireless display apparatuses if the controller detects power-on data to turn on the one of the wireless display apparatuses from the second control data.

2. The wireless set-top box according to claim 1, wherein, if a result of the analysis of the controller indicates that the second control data is received from a first wireless display apparatus and comprises power-off data to turn off a second wireless display apparatus, the controller controls a corresponding wireless interface unit to transmit the power-off data as the first control data to the second wireless display apparatus.

3. The wireless set-top box according to claim 1 or 2, wherein, if a result of the analysis of the controller indicates that the second control data is received from a first wireless display apparatus and comprises power-state request data with respect to at least one of the plurality of wireless display apparatuses, the controller controls a corresponding wireless interface unit to transmit power-state data of the at least one of the plurality of wireless display apparatuses as the first control data to the first wireless display apparatus.

4. The wireless set-top box according to claim 3, further comprising a storing unit, wherein the controller controls the storing unit to store the power-state data of the at least one of the plurality of wireless display apparatuses.

5. The wireless set-top box according to any preceding claim, wherein, if a result of the analysis of the controller indicates that the second control data is received from a first wireless display apparatus and comprises display-state request data with respect to at least one of the plurality of wireless display apparatuses, the controller controls a corresponding wireless interface unit to transmit display-state data of the at least one of the plurality of wireless display apparatuses as the first control data to the first wireless display apparatus.

6. The wireless set-top box according to claim 4 or 5, further comprising a storing unit, wherein the controller controls the storing unit to store the display-state data of the at least one of the plurality of wireless display apparatuses.

7. The wireless set-top box according to any preceding claim,
wherein each of the plurality of module units comprises a tuner unit and an MPEG unit, and
wherein the controller controls the power source unit to supply the driving power to at least one of the tuner unit and the MPEG unit according to the analysis of the second control data.

8. The wireless set-top box according to any preceding claim, wherein, if a result of the analysis of the controller indicates that the second control data is received from a first wireless display apparatus and comprises power-off data to turn off one of the plurality of wireless display apparatuses, the controller controls the power source unit to stop supplying the driving power to a corresponding module unit.

9. The wireless set-top box according to any preceding claim, wherein the plurality of module units comprises a first module unit to receive and process a first channel, and a second module unit to receive and process a second channel.

10. A wireless display apparatus to communicate with a wireless set-top box capable of communicating with a plurality of external wireless display apparatuses, the wireless display apparatus comprising:
a display unit;
a wireless interface unit which receives audio/video (AV) data and first control data from the wireless set-top box, and transmits second control data to the wireless set-top box;
a controller which controls the wireless interface unit to transmit control-state request data as the second control data to the wireless set-top box if control-state data of at least one of the plurality of external wireless display apparatuses is requested, and generates the control-state data, from the first control data, to be displayed on the display unit.

11. The wireless display apparatus according to claim 10, wherein the first control data comprises power-state data of the at least one of the plurality of external wireless display apparatuses.

12. The wireless display apparatus according to claim 11, wherein the display unit comprises a light emitting diode (LED) unit, and the controller controls the LED unit to indicate the power-state data.

13. The wireless display apparatus according to any of claims 10-12, wherein the first control data comprises display-state data of the at least one of the plurality of external wireless display apparatuses.

14. The wireless display apparatus according to any of claims 10-13, further comprising an on screen display (OSD) generating unit, wherein the controller controls the OSD generating unit to display the control-state data on the display unit.

15. The wireless display apparatus according to any of claims 10-14, further comprising an input unit which receives an input signal, wherein, if the input signal indicates turning off at least one of the plurality of external wireless display apparatuses, the controller controls the wireless interface unit to transmit power-off data to turn off the at least one of the plurality of external wireless display apparatuses, as the second control data to the wireless set-top box.

16. A control method of a wireless video system comprising a wireless set-top box and a plurality of wireless display apparatuses, the method comprising:
supplying power to a first wireless display apparatus and transmitting power-on data to the wireless set-top box if an input signal to turn on the first wireless display apparatus is inputted to the first wireless device;
controlling the wireless set-top box to supply driving power to a first module unit based on the power-on data, and to transmit audio/video (AV) data processed by the first module to the first wireless display apparatus; and
controlling the first wireless display apparatus to display an image corresponding to the AV data on a display unit.

17. The control method according to claim 16, further comprising:
transmitting control state-request data to the wireless set-top box if an input signal to request control-state data of at least one of the plurality of wireless display apparatuses is inputted to the first wireless device;
causing the wireless set-top box to receive the control-state request data and to transmit the control-state data of the at least one of the plurality of wireless display apparatuses to the first wireless display apparatus; and
causing the first wireless display apparatus to receive the control-state data of the at least one of the plurality of wireless display apparatuses and to display the received control-state data on the display unit.

18. The control method according to claim 17, wherein the control-state data comprises power-state data of the at least one of the plurality of wireless display apparatuses.

19. The control method according to claim 17 or 18, wherein the control-state data comprises display-state data of the at least one of the plurality of wireless display apparatuses.

20. A control method of a wireless set-top box capable of communicating with a plurality of wireless display apparatuses, the method comprising:
analyzing second control data received from one of the plurality of wireless display apparatuses, and supplying driving power to a corresponding module unit if, as a result of the analysis of the second control data, power-on data to turn on a first wireless display apparatus is detected from the second control data; and
transmitting audio/video (AV) data processed in the corresponding module unit to the first wireless display apparatus.

21. The control method according to claim 20 or 21, further comprising:
analyzing the second control data; and
if a result of the analysis of the second control data indicates that the second control data is received from the first wireless display apparatus and comprises power-off data to turn off a second wireless apparatus, transmitting the power-off data as first control data to the second wireless display apparatus.

22. The control method according to claim 20, further comprising storing control-state data of the at least one of the plurality of wireless display apparatuses in a storing unit.

23. The control method according to claim 22, further comprising:
analyzing the second control data; and
if a result of the analysis of the second control data indicates that the second control data comprises control-state request data, by which control state data of the at least one of the plurality of wireless display apparatuses is requested, transmitting the control-state data of the at least one of the plurality of wireless display apparatuses to the first wireless display apparatus.

24. A control method of a wireless display apparatus to communicate with a wireless set-top box capable of communicating with a plurality of external wireless display apparatuses, respectively, the method comprising:
receiving audio/video (AV) data from the wireless set-top box, and processing the received AV data to be decoded and displayed on a display unit of the wireless display apparatus;
transmitting control state request data to the wireless set-top box if an input signal requesting to display control-state data of at least one of the plurality of external wireless display apparatuses on the display unit is received; and
receiving the control-state data of at least one of the plurality of external wireless display apparatuses from the wireless set-top box and displaying the received control-state data on the display unit.

25. The control method according to claim 24, further comprising transmitting power-off data as control data to the wireless set-top box, if an input signal indicating turning off at least one of the plurality of external wireless display apparatuses is received.
